# EUROPÄISCHE PATENTSCHRIFT

(11) **EP 1 316 929 B1**
(45) Veröffentlichungstag und Bekanntmachung des Hinweises auf die Patenterteilung: **27.02.2008**
(21) Anmeldenummer: 02026657.3
(22) Anmeldetag: 29.11.2002
(51) Int. Cl.: G07F 19/00

(54) **Verfahren zur bargeldlosen Abwicklung von Automaten-Nutzungsvorgängen**
Cashless vending machine procedure
Méthode pour effectuer, sans numéraire, des procédures d'utilisation de machines de vente

(30) Priorität: 01.12.2001 EP 01128701
(43) Veröffentlichungstag der Anmeldung: 04.06.2003
(73) Patentinhaber: Scheidt & Bachmann GmbH, D-41238 Mönchengladbach (DE)
(72) Erfinder: Miller, Norbert Dr., 41063 Mönchengladbach (DE)
(74) Vertreter: Stenger, Watzke & Ring

(56) Entgegenhaltungen:
- WO-A-00/77697
- WO-A-01/45058
- WO-A-01/59725
- FR-A- 2 806 490
- US-A1- 2001 044 777
- PATENT ABSTRACTS OF JAPAN Bd. 1999, Nr. 01, 29. Januar 1999 (1999-01-29) & JP 10 269392 A (TOKAI RIKA CO LTD), 9. Oktober 1998 (1998-10-09)
- PATENT ABSTRACTS OF JAPAN Bd. 018, Nr. 089 (P-1692), 14. Februar 1994 (1994-02-14) & JP 05 290248 A (FUJI ELECTRIC CO LTD), 5. November 1993 (1993-11-05)
- PATENT ABSTRACTS OF JAPAN Bd. 015, Nr. 372 (P-1254), 19. September 1991 (1991-09-19) & JP 03 144883 A (MATSUSHITA REFRIG CO LTD), 20. Juni 1991 (1991-06-20)

## Beschreibung

Die vorliegende Erfindung betrifft ein Verfahren zur bargeldlosen Abwicklung von Automaten-Nutzungsvorgängen unter Verwendung eines Mobilfunkendgerätes zur Kommunikation mit einer Zentralstelle.

Automaten für unterschiedlichste Nutzungsvorgänge sind umfangreich im Einsatz. Zum einen sind dies Automaten zur direkten Steuerung einer Warenausgabe, beispielsweise Nahrungs- und Genußmittel, Automaten zur Ausgabe von Snacks, Süßigkeiten, Zigaretten, Getränken und dergleichen, Automaten für die Ausgabe von Fahrausweisen, aber auch Automaten zur Ausgabe von Treibstoff an Tankstellen und dergleichen. Weiterhin sind Automaten für die Einräumung von Berechtigungen bekannt, beispielsweise zur Nutzung von Parkraum in Parkhäusern, Zugangsberechtigungen beispielsweise in Freizeitanlagen, Schwimmbädern und dergleichen oder Automaten für die Nutzungsberechtigung von Speicherraum, beispielsweise Schließfächer und dergleichen. Im Sinne der vorliegenden Erfindung wird die Bezeichnung "Automat" ganz allgemein auch für automatisierte Zahlungsvorgänge, also Zahlstellen und dergleichen verwendet. So können unter diesem Begriff auch Verkaufsstellen zusammengefaßt werden, bei welchen im Zusammenhang mit einer manuellen Warenentnahme im wesentlichen ein automatisierter erfindungsgemäßer Zahlungsvorgang stattfindet, sogenannte point of sale.

Beispielsweise ist aus der WO 01/45058 A ein Verfahren und System zum Erwerben eines Produkts an Automaten unter Verwendung eines Mobiltelefons bekannt, wobei ein Kunde eine im Bereich des Automaten angegebene Telefonnummer eines Servers anwählt, dann einen produktbezogenen Verkaufscode über ein Telefonnetzwerk von dem Server empfängt und anschließend den empfangenen Verkaufscode in den Automaten eingibt. Dadurch wird der Automat zur Ausgabe eines gewünschten Produkts autorisiert.

Der übliche Fall der Automatenbenutzung sieht den Einsatz von Bargeld vor, indem die gewünschte durch den Automaten zu realisierende Leistung unmittelbar durch das Eingeben des erforderlichen Betrages in den Automaten freigegeben wird. Für mögliche Umstellungen von Automaten auf einen bargeldlosen Nutzungsverkehr gibt es die unterschiedlichsten Ansätze. So sind Automaten auf die Nutzung von Kreditkarten umgestellt, wozu allerdings ein online-Betrieb der Automaten erforderlich ist. Auch nutzen Automaten betreiberseitige bargeldlose Zahlungssysteme, beispielsweise durch die Ausgabe von vorausbezahlten oder kreditierten Karten nach vorhergehender Identifikation des Nutzers gegenüber dem Betreiber.

Bei allen bargeldlosen Systemen ergibt sich das Problem der Eröffnung der Möglichkeit eines gesicherten Inkassovorganges und die direkte Zuordnung zu einem Automatennutzungsvorgang. Ein Nachteil der auf kreditkartenbezogenen Inkassovorgängen basierenden Lösungssysteme ist die Notwendigkeit des online-Betriebs der Automaten, wodurch eine aufwendige Rechner- und Installationstechnologie erforderlich ist. Darüber hinaus umfassen derartige Systeme Sicherheitsrisiken, da die Nutzerdaten auch zu Zwecken des Mißbrauchs abgezweigt werden können. Die übrigen Systeme setzen eine umfassende und Inkassovorgänge absichernde Vorabwicklung zwischen Betreiber und Nutzer voraus, wodurch die Variabilität der entsprechenden Automatennutzung auf durch den Betreiber vorgegebene Nutzungsbereiche eingeschränkt wird. Die Nutzer müssen daher für unterschiedliche Nutzungsbereiche unterschiedliche Karten, Kennungen und dergleichen vorhalten.

Es sind keine Verfahren bekannt, die einen die Variabilität in bezug auf Nutzungsberechtigungen nicht einschränkende und die Automatennutzung vom Betreibersystem abkoppelnden Verfahren bekannt, die mit geringem administrativen Aufwand und ohne große vorausschauende Planung durch den Nutzer bei Einhaltung von erforderlichen Sicherheiten einsetzbar sind.

Ausgehend vom vorbeschriebenen Stand der Technik liegt der vorliegenden Erfindung die **Aufgabe** zugrunde, ein Verfahren zur bargeldlosen Abwicklung von Automaten-Nutzungsvorgängen unter Verwendung eines Mobilfunkendgerätes zur Kommunikation mit einer Zentralstelle zu verbessern, welches einen weitgehenden Schutz gegen Mißbrauch bei gleichzeitiger Erhöhung der Variabilität des Automateneinsatzes umfaßt und welches beinhaltet
a) Anwahl einer im Bereich des Automaten angegebenen Telefonnummer einer Zentralstelle,
b) Empfang eines automaten- und/oder vorgangsbezogenen Abwicklungscodes für eine eingeräumte Nutzungsberechtigung über die Zentralstelle,
c) Eingeben des empfangenen Abwicklungscodes in den Automaten,
wobei der Abwicklungscode eine Zeitinformation enthält. Das Verfahren kennzeichnet sich dadurch aus, daß automatenseitig aufgrund einer im Abwicklungscodes enthaltenen Zeitinformation eine Uhrnachstellung durchgeführt wird.

Es können beliebige Automaten ohne direkte Kommunikationsverbindung zu einer Zentralstelle, einer Abgleichstelle oder dergleichen für beliebige Zwecke wie Produktausgabe, Ausgabe von Berechtigungsausweisen, Nutzungsberechtigungen und dergleichen eingesetzt werden. Ein solcher offline-Automat, der selbstverständlich für die herkömmlichen Zahlungsweisen wie Bargeld, Kreditkarte und dergleichen eingerichtet sein kann, weist bei Auswahl der erfindungsgemäßen Abwicklungsform eine Telefonnummer aus. Mittels eines Mobilfunkendgerätes wählt der Nutzer diese Telefonnummer an. In einer Zentralstelle, einem sogenannten offline-payment-Server wird die eingehende Mobilfunknummer empfangen. Unter Umständen setzt dies eine entsprechende Freigabe der Anzeige der Absendernummer durch den Nutzer in seinem Mobilfunkgerät voraus, wobei es sich jedoch um einen von der vorliegenden Erfindung unabhängigen bekannten Stand der Technik handelt. Es ist anzumerken, daß es nicht zu einer kostenpflichtigen Kommunikationsverbindung zwischen dem Nutzer und der Zentralstelle kommen muß, denn es genügt, wenn die Zentralstelle den Anrufer anhand der eingehenden Nummer identifizieren kann. Da der Nutzer die Nummer vom Automaten entnommen hat, ist zentralstellenseitig bereits eine direkte Zuordnung von beabsichtigter Nutzung einerseits und der möglichen Nutzungsart des Automaten andererseits ohne weiteres möglich. Entweder erfolgt dies dadurch, daß eine Zentralstelle ohnehin nur für ganz bestimmte Automaten - und damit Nutzungstypen - eingerichtet ist, oder durch eine in der Zentralstelle hinterlegte Datenbank in bezug auf die möglichen Anwahlnummern. Nach der Anwahl des offline-payment-Servers ist dort also die Information vorhanden, daß der registrierte Nutzer des Mobilfunkendgerätes eine bestimmte vorgegebene Nutzungsberechtigung eines durch die Anwahlnummer identifizierten Automaten erlangen möchte. Zentralstellenseitig wird nunmehr ein Abwicklungscode zusammengestellt und beispielsweise in Form eines sms an das Mobilfunkendgerät des Nutzers übermittelt. Alternativ zu einer SMS können beispielsweise Sprachansagen, WAP-Übertragungen oder dergleichen verwendet werden. Der Abwicklungscode ist auf die beabsichtigte Nutzungsart und den zu benutzenden Automaten abgestimmt. Der den Abwicklungscode empfangende Nutzer gibt diesen Abwicklungscode nunmehr in den Automaten ein. Der dortige Rechner ist nun in der Lage, anhand des Abwicklungscodes nutzungsbezogene Informationen zu ermitteln und den Automaten für eine bestimmte Nutzungsart freizugeben. Der Nutzer kann nun die gewünschte Nutzungsberechtigung einlösen, d. h. Produkte entnehmen, eine Abbuchung bestätigen, eine Berechtigung realisieren oder dergleichen.

Im Automaten werden nun Informationen gespeichert, die den eingegebenen Code einerseits und die durchgeführte Nutzung andererseits umfassen. In der Zentralstelle ist dem Abwicklungscode die Mobilfunknummer des Betreibers zugeordnet. Es ist nunmehr möglich, im einfachen offline-Transaktionsbetrieb einen Inkassovorgang in bezug auf die durchgeführte Nutzung durchzuführen. Hierzu stehen die an sich bekannten Verfahren bereit, beispielsweise die Abwicklung über die Telefonrechnung, wobei der Telefonbetreiber die Zentralstelle ist, die die Zuordnung der Mobilfunknummer zu personenbezogenen Inkassoinformationen vorhält, oder es können hierfür separate Voreinstellungen entweder im offline-payment-Server selbst oder in von diesem genutzten übergeordneten Zentralen erfolgen.

Offline-payment-Server können für eine bestimmte Automatengruppe oder als übergeordnetes System ausgelegt sein, und der Bezug zu Inkassoinformationen der Nutzerperson kann direkt oder indirekt hergestellt sein. Will beispielsweise der Nutzer bestimmte Automatentypen nutzen, kann es sinnvoll und erforderlich sein, wenn er sich vorher bei der Betreiberzentrale so identifiziert, daß diese seine Mobilfunknummer direkt Inkassoinformationen, beispielsweise Kontonummer, Kreditkartennummern oder dergleichen einrichten kann. Auch können prepaid-Systeme genutzt werden, indem eine Zentralstelle ein Guthaben eines Nutzers, zugeordnet zu seiner Mobilfunknummer verwaltet. Andererseits können auch übergeordnete Zentralen die personenbezogenen Inkassoinformationen und die Mobilfunknummer des Nutzers verwalten und einer Vielzahl von offline-payment-Servern bei Bedarf bereitstellen.

Die Übermittlung der im Automaten gespeicherten Informationen kann im offline-Betrieb, beispielsweise durch Datenträgeraustausch oder dergleichen erfolgen, oder auch im online-Betrieb durch Auslesen des Automatenspeichers und Übermitteln der Informationen an die gewünschte Zentralstelle. In keinem Fall ist es erforderlich, daß der Automat zeitlich unbegrenzt und zum direkten Zweck der Nutzung in irgendeiner Form zu Zwecken der Datenkommunikation vernetzt sein muß.

Der Abwicklungscode kann erfindungsgemäß eine Vielzahl von Informationen umfassen. Beispielsweise können konkrete freigegebene Beträge oder Betragsbereiche enthalten sein, Informationen wie PIN-Prüfung erforderlich oder nicht und dergleichen. Weiterhin ist der Abwicklungscode so gestaltet, daß der Automat die Richtigkeit des Codes in jedem Fall erkennen kann. So ist beispielsweise eine Identifikation vorgesehen, in welcher sich der Automat als Bestimmungsort erkennen kann, eine sogenannte Point-of-Sale-ldentifikation (POS-ID). Sinnvoll ist auch ein Zeitsignal. Weiterhin sinnvoll kann der Abwicklungscode in verschlüsselter Weise eine auf die persönliche Identifikationsnummer bezogene Information umfassen, so daß der Automat direkt bei Eingabe der persönlichen Identifikationsnummer eine Abgleichreferenz zur Verfügung hat Erfindungsgemäß enthält der Abwicklungscode eine Zeitinformation. Zentralseitig wird bei Übermittlung des Abwicklungscodes die aktuelle Zeit der Zentraluhr erfaßt und in den Code eingebaut. Automatenseitig kann bei Decodierung des Abwicklungscodes dann der Zeitraum zwischen der im Code enthaltenen Zeit einerseits und der automatenseitigen Zeit andererseits ermittelt und somit auf die Gültigkeit des Codes in Abhängigkeit vorgegebener Zeitintervalle geschlossen werden.

Ein Problem im Abgleich zwischen Zentrale und Automat kann sich dann ergeben, wen die Codierung eine Zeitinformation umfaßt, die automatenseitig anhand der Ist-Zeit überprüft wird. Ist die automatenseitige Uhr jedoch nicht genau oder jedenfalls nicht mit der zentralseitigen Uhr in Übereinstimmung, ergibt sich hier ein Interpretationsproblem. Aus diesem Grunde wird mit der Erfindung ein Verfahren zum automatischen Zeitabgleich vorgeschlagen, mit welchem innerhalb bestimmter Zeitbereiche ein Nachstellen einer nicht in direkter Verbindung mit einer Zentralzeit stehenden Satellitenuhr einerseits erfolgen kann, andererseits eine vollständige, d. h. außerhalb eines Toleranzbereiches liegende Abweichung feststellbar sind. Im Falle der Feststellung kann beispielsweise eine Außerbetriebsetzung des Automaten bis zum nächsten Service erfolgen.

Dieses Verfahren sieht vor, daß in dem Automaten, in dem eine nicht mit einer Quelle verbundene Satellitenuhr geführt wird, ein Code eingegeben wird, welcher auch eine Zeitcodierung enthält. Durch die Decodierung erhält der Automatenrechner einen Zeitpunkt, der der dem Zeitpunkt der Codierung unter Nutzung der nicht mit der Satellitenuhr verbundenen Zentraluhr entspricht. Diese erhaltene Zeit wird nun mit der sich aus der automatenseitigen Realzeit verglichen. Dabei wird von vorn herein ein Toleranzspektrum angelegt, welches in etwa der Zeitspanne entspricht, die notwendig ist, um eine Codierung an einen Nutzer zu übermitteln und durch den Nutzer in den Automaten einzugeben. Beispielsweise wird eine Zeitverzögerung von 10 Sekunden angesetzt. Liegen die Zeiten auseinander, wird gemäß dem erfindungsgemäßen Verfahren automatenseitig ein zweites, erweitertes Toleranzfeld verwendet, beispielsweise minus 20 Sekunden. Kommt es auch hier zu keiner Übereinstimmung, wird automatenseitig beispielsweise ein weiteres Toleranzfeld, z. B. minus 30 Sekunden verwendet. Liegen also Echtzeit und empfangene Zeit um die negativen Toleranzzeiträume auseinander, erkennt der Automat einen gültigen Code und kann entsprechend angesteuert werden. Hierbei kann das Erfordernis der angewendeten Toleranz statistisch erfaßt und ausgewertet werden. So ist der Automatenrechner in der Lage, festzustellen, daß regelmäßig eine große Toleranzgrenze verwendet werden muß, um eine Übereinstimmung zu finden. Somit weiß der Automat, daß die Satellitenuhr vorgeht und er kann diese beispielsweise um einen Toleranzfeldmittelwert justieren. Fällt jedoch auch bei mehrfacher Toleranzfeldänderung in den negativen Bereich keine Übereinstimmung an, wird gemäß dem erfindungsgemäßen Verfahren wenigstens eine Übereinstimmungsprüfung in wenigstens einem positiven Toleranzfeld durchgeführt. Eine Übereinstimmung in diesem Bereich bedeutet, daß die Satellitenuhr gegenüber der Zentraluhr nachgeht, so daß alle empfangenen Zeiten in einem positiven Toleranzfeld, also in der zeitlichen Zukunft liegen. In diesem Fall kann der Rechner ebenfalls die Satellitenuhr durch vorstellen nachjustieren. Erst wenn weder in den negativen noch den positiven Toleranzfeldern Übereinstimmungen erzielbar sind, wird der Code als ungültig erkannt und dargestellt. Durch die statistische Erfassung solcher Vorgänge kann der Automat nach einer bestimmten Anzahl direkt aufeinanderfolgender, ungültiger Vorgänge erkennen, daß entweder Manipulationsversuche vorliegen oder seine Satellitenuhr dermaßen gegenüber der Zentraluhr verstellt ist, daß der Automatenrechner den Automaten als nicht betriebsbereit sperrt, so daß erst durch einen entsprechenden Service ein wieder Inbetriebsetzen erfolgt. Während des Service kann beispielsweise auch eine Satellitenuhrnachstellung erfolgen.

Ein weiteres Problem, dem sich die vorliegende Erfindung stellt, ist das Problem des Wechsels der Sicherheitsschlüssel, die für die kryptologische Verschlüsselung im Zentralrechner einerseits und die kryptologische Entschlüsselung im Automatenrechner andererseits verwendet werden. Da Zentralrechner und Automatenrechner nicht in einer Kommunikationsverbindung stehen, also im Offline-Betrieb betrieben werden, ist es erforderlich, daß beide Rechner auf die gleichen Schlüssel zurückgreifen. Aus Sicherheitsgründen ist es andererseits jedoch erforderlich, die Schlüssel von Zeit zu Zeit zu wechseln, um die Ausforschbarkeit und Manipulierbarkeit des Systems ausschließen zu können.

Aus dem Stand der Technik bekannte Verfahren, Schlüsselwechsel zu bestimmten Zeitpunkten durchzuführen, haben nicht nur den Nachteil der leichteren Ausforschbarkeit, sondern enthalten auch das Problem, daß die Zentraluhr und die Satellitenuhr nicht regelmäßig identisch laufen, es also Zeitverzögerungen zwischen den beiden Schlüsselwechseln gibt, die zu Funktionsstörungen führen können.

Das mit der Erfindung vorgeschlagene Verfahren löst diese Probleme. Es wird dabei vorgesehen, daß dem dezentral betriebenen Automatenrechner eine "Tabelle" vor Codierungsschlüsseln durch Einspeicherung bereitgestellt wird. Vom Startzeitpunkt an verwendet der Automatenrechner den ersten Schlüssel der Tabelle für die Decodierung erhaltener Codes. Dies wird solange durchgeführt, bis eine Decodierung einen nicht gültigen Code identifiziert. Daraufhin wird seitens des Automatenrechners der erhaltene Code nochmals entschlüsselt, wobei der nächstfolgende Schlüssel aus der Tabelle zur Anwendung kommt. Ergibt sich bei dieser Operation ein gültiger Code, wird der gerade verwendete Schlüssel fortan als neuer Schlüssel angewandt. Auf diese Weise kann somit ein Schlüsselwechsel, angeregt durch den Zentralrechner, zeitlich unabhängig seitens des Automatenrechners nachvollzogen werden, ohne daß beide zeitlich abgeglichen oder im Online-Betrieb sind. In dem Augenblick, wo der Automatenrechner erkennt, daß der nächstfolgende Code eine gültige Decodierung hervorbringt, ist dieser nächstfolgende Code der neue Startcode. Durch dieses erfindungsgemäße Verfahren sind Wechsel von Sicherheitsschlüsseln praktisch völlig frei von zeitlichen Vorgaben, Regeln und dergleichen durchführbar, ohne daß sich Manipulationsmöglichkeiten, Ausforschungsmöglichkeiten oder dergleichen ergeben.

Die Eingabe der übermittelten Abwicklungscodes in den Automaten kann unter Verwendung eines Tastaturfeldes, gegebenenfalls auch dargestellt auf einem Touchscreen, oder alternativ auch berührungslos erfolgen, indem der Betreiber des Mobilfunkgerätes den empfangenen Code beispielsweise mittels einer blue tooth-Verbindung, Irda (Infrarot) oder dergleichen an den Automaten weitergibt. Dabei wird gemäß einem besonders vorteilhaften Vorschlag der Erfindung ein reduziertes Tastaturfeld bereitgestellt und gekoppelt mit der Entwicklung nur einen reduzierten Zahlensatz umfassender Codes. Beispielsweise kann das Tastaturfeld nur die Ziffern 1 bis 9 aufweisen, also keine 0. Die Codes werden dann so aufgebaut, daß die Eingabe einer 0 nicht erforderlich ist. Dies hat den besonderen Vorteil, daß Fehleingaben bzw. Bedienfehler vermieden werden. Da nahezu alle im Bereich des Automaten angezeigten und vom Nutzer anzuwählenden Telefonnummern mit einer 0 anfangen, kommt der Nutzer gar nicht erst auf die Idee, zu versuchen, über das automatenseitige Tastaturfeld eine Nummernwahl durchzuführen. Vielmehr werden die mangelnde Eignung und damit auch der Bedienfehler automatisch erkannt.

Das erfindungsgemäße Verfahren ergänzt die Abkopplung der Automatennutzung von der Betreiberorganisation einerseits und dem Inkassovorgang andererseits. Der jeweils zu nutzende Automat ist eine stand-alone-Version. Es ergibt sich eine indirekte Verbindung zum offline-payment-Server durch die auf dem Automat lesbar identifizierte Telefonnummer. Die Kommunikation zwischen dem Nutzer und dem offline-payment-Server erfolgt unter Nutzung eines Mobilfunkendgerätes, wobei die Kosten auf die Übersendung einer sms von der Zentralstelle an den Nutzer reduziert werden können. Der vor Ort im Bereich des Automaten befindliche Nutzer kommuniziert seinerseits mit dem Automaten über eine direkte Eingabeschnittstelle, beispielsweise blue tooth oder Tastaturfeld. Eine indirekte Kopplung zwischen payment-Serversystem und Automat ergibt sich durch eine Synchronisation der Rechnersoftware, d. h. der automatenseitige Rechner ist in der Lage, die vom zentralseitigen Rechner zusammengestellte Abwicklungscodierung zu entschlüsseln und den Automaten damit für die gewünschte Berechtigung freizuschalten. Die Variabilität des Einsatzes vergrößert zugleich auch die Einsatzmöglichkeiten für Automaten. Das Verfahren ist anwendbar auf Warenausgabeautomaten, beispielsweise Tankstellensäulen, Zigarettenautomaten, Fahrausweisautomaten, Warenausgabeautomaten und dergleichen, kann jedoch bis hin zu Zahlungsabwicklungen in herkömmlichen Verkaufsstellen erweitert werden. So kann sich beispielsweise ein Käufer bei Betreten eines Supermarktes, Warenhauses oder dergleichen nach dem erfindungsgemäßen Verfahren einen Betrag freischalten lassen und an der Kasse nur noch durch Eingabe des empfangenen Abwicklungscodes den Bezahlungsvorgang abwickeln. Auch können Verkaufsörtlichkeiten direkt auf das Verfahren ausgerichtet werden.

Die Sicherheitsrisiken sind bei dem erfindungsgemäßen Verfahren auf eine Minimum reduziert. Im Normalfall kann davon ausgegangen werden, daß bereits die Nutzung des Mobilfunkgerätes durch die erforderliche Eingabe ein PIN ausreichend gesichert ist. Ein Mißbrauch des Verfahrens kommt also nur in Betracht, wenn ein Mobilfunkgerät in eingeschaltetem und freigegebenem Zustand durch einen unberechtigten Nutzer genutzt wird. Durch die Einrichtung von Tageslimits, die zusätzliche Anforderung der Eingabe von persönlichen Identifikatiosnummern, die Analyse statistisch ermittelter Diebstahlprofile und dergleichen kann jedoch dieses Risiko ebenfalls auf ein Minimum reduziert werden.

Weitere Vorteile und Merkmale der Erfindung ergeben sich aus der folgenden Beschreibung anhand der Figur. Dabei zeigt:

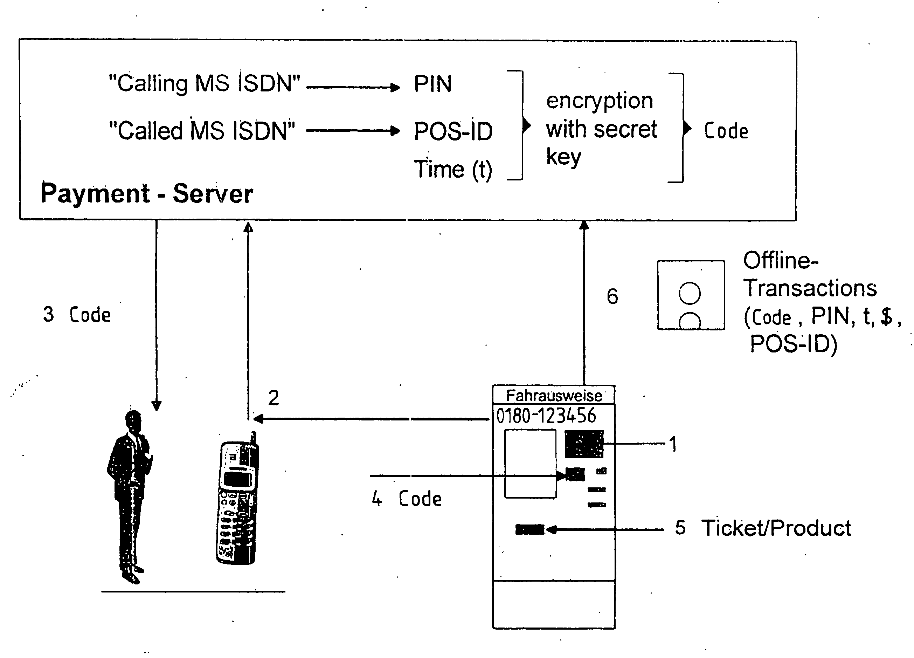

- Fig. 1: eine schematisierte Darstellung eines Ablaufdiagramms für die Nutzung eines Fahrausweisautomaten.

In der Figur ist ein Fahrausweisautomat gezeigt, welcher gut lesbar eine Telefonnummer identifiziert. Auf einem Auswahlfeld 1, beispielsweise einem Touchscreen, wählt der Nutzer die Zahlform aus. Entscheidet er sich für die erfindungsgemäße Zahlungsform, stellt sich der Automat für eine gewisse Zeit auf die Eingabe eines Abwicklungscodes ein. Der Nutzer wählt mittels des Mobilfunkgerätes, dargestellt durch ein Handy, die auf dem Automaten angegebene Telefonnummer und übermittelt über ein Mobilfunknetz (GSM) seine Telefonnummer an einen offline-payment-Server. Der offline-payment-Server ermittelt für den beabsichtigten Nutzungsvorgang, der ihm durch die angewählte Telefonnummer bekannt ist, den Abwicklungscode und übermittelt diesen beispielsweise mittels sms, Sprachansage, WAP oder dergleichen an das Mobilfunkgerät des Nutzers, gekennzeichnet durch das Bezugszeichen 3. Der Nutzer überträgt den empfangenen Abwicklungscode in das am Automaten bereitgehaltene Tastaturfeld, welches auch ein Touch Screen sein kann, gekennzeichnet durch Bezugszeichen 4. Optional kann die zusätzliche Eingabe einer personenbezogenen Identifikationsnummer erforderlich sein. Der Automat wird nun für die gewünschte Benutzung freigegeben, d. h. der Nutzer kann im Falle des gezeigten Ausführungsbeispiels nunmehr einen Fahrausweis entnehmen, bezeichnet durch Bezugszeichen 5. Hier kann er entweder einen freigegebenen Betrag verbrauchen oder in Abhängigkeit vom Abwicklungscode den Vorgang je nach Erfordernis abschließen. Nach der Ausgabe ist der Nutzungsvorgang für den Nutzer beendet. Im Automaten sind der Abwicklungscode oder daraus ermittelte Informationen sowie die den direkten Nutzungsvorgang betreffenden Informationen gespeichert. Aus dem Abwicklungscode kann der Automat zunächst vor der Freigabe die Zulässigkeit des Codes ermitteln, indem er beispielsweise die POS-ID entschlüsselt, optional die zusätzliche Prüfung der persönlichen Identifikationsnummer durchführt, ein Zeitsignal entschlüsselt und/oder setzt und dergleichen.

Mit 6 ist dann die Vorbereitung zur Abwicklung eines Inkassovorgangs gekennzeichnet, dargestellt durch eine Diskette. Die Art des Auslesens der Informationen aus dem Speicher des Automaten und die Übermittlung an die jeweilige Zentralstelle zur Abwicklung des Inkassovorgangs sind dabei variabel und können im offline-Betrieb oder im online-Betrieb erfolgen, wobei der online-Betrieb nur kurzzeitig und zweckgebunden hergestellt werden muß.

Bei diesem Ausführungsbeispiel ist auch ein Beispiel für die zentralseitige Zusammenstellung eines Abwicklungscodes gezeigt. Aus der angewählten Telefonnummer, bezeichnet mit "called MS ISDN" ermittelt die Zentrale die POS-ID und den Zeitpunkt. Aus der Analyse der anrufenden Mobilfunknummer, bezeichnet mit "calling MS ISDN" ermittelt die Zentrale die persönlichen Identifikationsdaten des Nutzers. Über diese persönlichen Identifikationsdaten kann die Zentrale aus einer Datenbank die erforderlichen Informationen wie Betragslimits, Erfordernis der zusätzlichen Eingabe einer persönlichen Identifikationsnummer, Sperrhinweise und dergleichen ermitteln. Aus der POS-ID kann die Zentrale weiterhin Verfallslimits und dergleichen festlegen. Aus den zusammengetragenen Informationen wird eine Abwicklungscodierung zusammengestellt und verschlüsselt, bezeichnet mit "encryption with secret key". Hierbei können je Zahlstelle (POS-ID) individuelle, also verschiedene, geheime Schlüssel zum Einsatz kommen. Die daraus sich ergebende Abwicklungscodierung wird im Schritt 3 beispielsweise per sms an den Nutzer übertragen. Nach in der oben beschriebenen Weise abgewickelter Nutzung hält der Rechner des Automaten die Transaktionsinformationen bereit, beispielsweise den Abwicklungscode, optional die persönliche Identifikationsnummer, Zeitpunkt, Betrag und die POS-ID. Weitere oder alternative Informationen wie beispielsweise Wareninformationen für statistische Auswertungen und dergleichen können aufgenommen sein.

Das beschriebene Ausführungsbeispiel dient nur der Erläuterung und nicht beschränkt den in den Ansprüchen definierten Schutzumfang.

### Bezugszeichenliste

- 1: Zahlungsformauswahl
- 2: Anruf an Zentrale
- 3: Übermittlung des Abwicklungscodes
- 4: Eingabe des Abwicklungscodes
- 5: Nutzung
- 6: Informationstransaktion für Inkasso

## Patentansprüche

1. Verfahren zur bargeldlosen Abwicklung von Automaten-Nutzungsvorgängen unter Verwendung eines Mobilfunkendgerätes zur Kommunikation mit einer Zentralstelle, mit den Schritten:
a) Anwahl einer im Bereich des Automaten angegebenen Telefonnummer einer Zentralstelle,
b) Empfang eines automaten- und/oder vorgangsbezogenen Abwicklungscodes für eine eingeräumte Nutzungsberechtigung über die Zentralstelle,
c) Eingeben des empfangenen Abwicklungscodes in den Automaten,
wobei der Abwicklungscode eine Zeitinformation enthält, **dadurch gekennzeichnet, daß** automatenseitig aufgrund der im Abwicklungscode enthaltenen Zeitinformation eine Uhrnachstellung durchgeführt wird.

2. Verfahren nach Anspruch 1, wobei zur Codierung/Decodierung ein kryptographischer Schlüssel verwendet wird, welcher sowohl in der Zentralstelle als auch im Automaten von Zeit zu Zeit gewechselt wird, **dadurch gekennzeichnet, daß** automatenseitig ein Wechsel des krypographischen Schlüssels aufgrund der Erkennung einer ungültigen Codierung mit einem bisherigen Schlüssel und der Erkennung der Gültigkeit der Codierung mit einem alternativen Schlüssel erkannt wird.

3. Verfahren nach einem der vorhergehenden Ansprüche, wobei die Eingabe des Abwicklungscodes in den Automaten mittels eines automatenbezogenen Tastaturfeldes erfolgt, **dadurch gekennzeichnet, daß** ein Tastaturfeld mit reduziertem Ziffernumfang verwendet wird.

## Claims

1. A method for the cashless handling of vending-machine usage processes using a mobile telephony terminal for communication with a master station, comprising the steps of:
a) dialling a telephone number, indicated in the area of the vending machine, for a master station;
b) receiving a vending-machine-related and/or process-related transaction code for a usage authorisation granted by the central location; and
c) entering the received transaction code into the vending machine,
whereby the transaction code contains time information, **characterised in that**, based on the time information contained in the transaction code, a clock adjustment is performed by the vending machine.

2. A method according to claim 1, whereby a cryptographic key is used for coding/decoding, where said key is changed from time to time in the master station as well as in the vending machine, **characterised in that** change of the cryptographic key is recognised by the vending machine based on recognition of invalid coding with a prior key and recognition of validity of the coding with an alternative key.

3. A method according to one of the preceding claims, whereby the transaction code is input into the vending machine via a vending-machine-related keypad, **characterised in that** a keypad with a reduced number range is used.

## Revendications

1. Procédé pour l'exécution sans numéraire de procédures d'utilisation de machines de vente en utilisant un terminal de radiotéléphonie pour communiquer avec un central, comprenant les étapes suivantes :
a) appel d'un numéro de téléphone d'un central indiqué au niveau de la machine de vente,
b) réception d'un code d'exécution spécifique de la machine de vente et/ou de la procédure pour un droit d'utilisation accordé par le central,
c) saisie du code d'exécution reçu dans la machine de vente,
dans lequel le code d'exécution contient une information de temps, **caractérisé en ce que** la machine de vente exécute, sur la base de l'information de temps contenue dans le code d'exécution, un ajustement de l'heure.

2. Procédé selon la revendication 1, dans lequel est utilisée pour le codage et le décodage une clé cryptographique qui est modifiée de temps en temps aussi bien dans le central que dans la machine de vente, **caractérisé en ce que** du côté de la machine de vente, le changement de la clé cryptographique est reconnu par la détection d'un codage incorrect avec une clé utilisée jusqu'alors et la reconnaissance de la validité du codage avec une autre clé.

3. Procédé selon l'une des revendications précédentes, dans lequel la saisie du code d'exécution dans la machine de vente est effectuée au moyen d'un pavé de touches associé à la machine, **caractérisé en ce qu'**un pavé de touches ayant un nombre réduit de chiffres est utilisé.
